# EUROPEAN PATENT APPLICATION

(11) **EP 1 514 634 A1**
(43) Date of publication of application: **16.03.2005**
(21) Application number: 03396084.0
(22) Date of filing: 10.09.2003
(51) Int. Cl.: B23K 26/32, B23K 26/34, C23C 26/00, H01R 43/02

(54) **Method for coating a contact surface of an electric conductor**

(71) Applicant: Fortum OYJ, 02150 Espoo (FI)
(72) Inventor: Karhinen, Tapani, 02400 Kirkkonummi (FI)
(74) Representative: Hovi, Simo

(57) **Abstract**

The invention relates to a method for coating a metallic contact surface (2) of an electrical conductor, the contact surface (2) being intended to make contact to a second metallic contact surface (3) for passing electric current via both contact surfaces. According to the method, on the contact surface (2) is formed a metallic coating layer (4) of a higher electrode potential at the point where the first contact surface (2) meets the second contact surface (3). The first contact surface (2) is mechanically pretreated prior to the formation of the coating layer (4).

## Description

The invention relates to a method according to the preamble of claim 1 for coating the contact surface of an electrical conductor.

The basic steps of zinc manufacture are: beneficiation, roasting, leaching and pregnant leach solution purification. The purified leach solution is passed into an electrowinning tank in which the solution is mixed with a circulating electrolyte. Conventionally, the electrolyte is sulfuric acid (H₂SO₄). Additionally, the tank houses anodes and planar cathode plates. The anodes are generally made from silver-alloyed lead while the cathodes are of aluminum. The cathode plates rest on electric-current-carrying rails running alongside the electrowinning tanks. Zinc dissolved in the electrolyte is precipitated in the tanks by electric current onto the cathode plates. The higher the current density than can be used, the shorter the cycle time required for zinc precipitation at the cathodes. After electrowinning, the cathode plates are elevated out of the tanks and taken to stripping equipment where zinc is removed therefrom. The zinc plates stripped from the cathodes are fed into a casting furnace wherein zinc is melted for casting into ingots. In the casting process, different kinds of zinc alloys can be prepared.

To the cathode plate is connected a cathode rod of aluminum having a contact pad of copper attached thereto by friction welding. The contact pad makes contact to a current rail running alongside the precipitation tank thus allowing current to pass from the current rail via the contact pad and the cathode rod to the cathode plate.

A disadvantage of the above-described construction relates to galvanic corrosion occurring at the interface between the aluminum cathode rod and the copper pad. Although the cathode rod is not immersed into the electrolyte tank, the air about the tank is richly saturated with corrosion-accelerating sulfuric acid fumes that condense on the interface between the copper pad and the aluminum rod. As the electrode potential of aluminum is lower than that of copper, an electrochemical cell is formed causing galvanic corrosion on the cathode rod. Herein, aluminum serves as the metal of the lower electrode potential, whereby its less noble metal makes it the anode electrode that undergoes corrosion. Also the copper conductor pad oxidizes. Patches of oxide and corrosion increase resistance and voltage loss at the interface between the cathode rod and the contact pad. As a zinc-refining plant generally operates using tens of thousands of cathode plates, the power losses caused by corrosion fretting are substantial. Furthermore, repair of damage due to corrosion increases the plant maintenance costs. Similar problems also occur in other electrical conductors at the points where two metals of different electrode potentials are contacted with each other.

Corrosion control has been attempted by way of coating the aluminum contact surface of an electrical conductor by a nobler metal. The protective metal layer is applied by an electrolytic process in which dissolved metallic material of the coating is deposited on the contact surface by electrochemical methods. The electrolytically deposited coating layer is thin and in the deposition process readily becomes porous, whereby corrosive agents can reach the underlying base metal of the contact surface. Moreover, the electrolytically deposited contact surface coating has a poor resistance to mechanical wear.

US Pat. No. 4,810,525 discloses a method wherein onto the contact surface of an electrical conductor is applied powdered coating material, whereupon the coating material is melted onto the contact surface by means of a laser beam. The oxide film of the contact surface is removed chemically by way of adding an oxide film-removing agent into the coating material and a binder for binding the coating material and agent to each other. The drawbacks of this method are its complicated implementation and multiple process steps that make the processing of the coating layer tedious, costly and subject to defects.

It is an object of the present invention to provide a simplified method for producing the contact surface of an electrical conductor.

The goal of the invention is attained by virtue of subjecting the contact surface of an electrical conductor to be coated to a mechanical pretreatment prior to the deposition or bonding of the coating layer. The mechanical pretreatment step removes the oxide layer and other impurities from the contact surface. In a preferred embodiment of the invention, the pretreatment step is performed not later that half an hour before the coating layer is formed.

The invention offers significant benefits.

In addition to removing the oxide layer from the contact surface, the mechanical pretreatment also removes other impurities that might deter the bonding of the coating layer to the contact surface. Furthermore, the method according to the invention is cost-efficient, simple to apply and involves only one process step thus making it readily applicable to mass production and fabrication of large series. The pretreatment step is also free from the use of chemicals thus avoiding the risks involved in the handling of chemicals.

In the following the invention will be examined in greater detail by making reference to the appended drawings in which
FIG. 1 is a schematic side elevation view of the contact surfaces of a connector or switch suitable for use on an electrical conductor;
FIG. 2 is the contact surface of FIG. 1 being coated with the help of a laser beam coating apparatus;
FIG. 3 is a cross-sectional view of the contact surface of FIG. 1 as the coating layer is being applied thereon by welding with the help of a laser beam coating machine;
FIG. 4 is a cross sectional view of the contact surface of FIG. 1 as the coating layer is being applied thereon by vacuum brazing; and
FIG. 5 is a cross-sectional view of the contact surface of FIG. 1 as the coating layer is being bonded thereon by a laser beam coating apparatus.

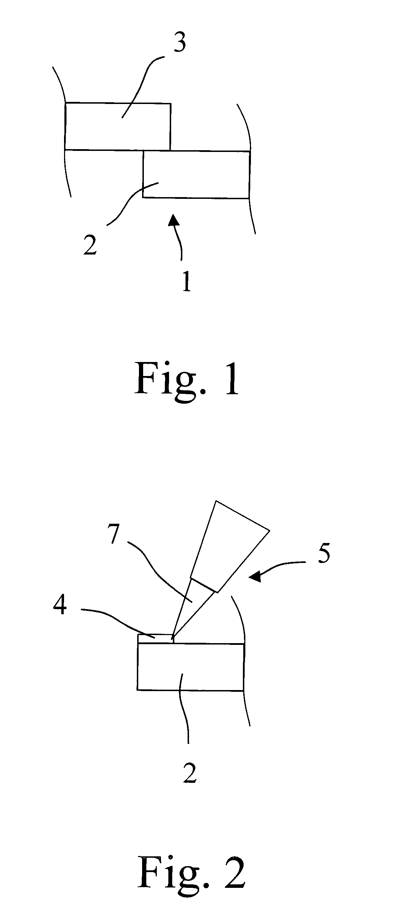

Referring to FIG. 1, a contact surface 2 of a connector or switch 1 is intended to make galvanic contact with a second contact surface 3 so that electric current can be passed via connector 1. Contact surface 2 is of a different metal than that used in the second contact surface 3. Advantageously, the contact surface 2 is of aluminum and the second contact surface 3 is of copper. Having the contact surfaces in contact with each other, a galvanic pair of metals is formed in which aluminum with its lower electrode potential will be subjected to corrosion as the less noble material. The corrosion rate will be the faster the larger the surface are of the copper part, that is, of the nobler metal, in proportion to the area of the aluminum part. The corrosion rate may also be accelerated by environmental conditions. As a result of corrosion, the resistance between the facing contact surfaces and thus the voltage loss at connector 1 increase.

In the first embodiment of the invention shown in FIG. 2, the contact surface 2 of the connector of FIG. 1 made from a less noble metal is coated with a metallic coating layer 4 adhered with the help of a laser beam coating apparatus. The material of coating layer 4 is selected to be nobler in the series of galvanic electrode potentials than the metal of the nobler contact surface that, e.g., in the preferred embodiment illustrated in FIG. 1 is copper. Advantageously, the coating layer 4 is of a noble metal, most preferably silver. The coating layer 4 is formed onto the contact surface 2 of the connector at a point where contact surface 2 meets the second contact surface of the connector. As the entire surface of contact surface 2 intended to face the second contact surface is protected by the coating layer, the base material of contact surface 2 and the second contact surface will not directly meet each other when electric current is being passed via the connector.

The laser beam coating apparatus 5 shown in FIG. 2 comprises a laser head 6 wherefrom a laser beam 7 is aimed at the contact surface 2 to be coated. The contact surface 2 being coated is moved relative to the laser beam 7 and/or the laser beam 7 is moved relative to contact surface 2. Laser beam 7 melts the surface layer of contact surface 2. Coating material is applied in powder form to the area of contact surface 2 molten by laser beam 7. During the coating process, the melt is protected by shielding gas ejected from laser head 6. The coating material is fed coaxially about laser beam 7, whereby the stream of the coating material and the shielding gas surrounds laser beam 7. In lieu of applying the coating material in powder form, the coating material can be fed in sheet or wire form to the area molten by the laser beam 7.

When the coating material applied to the area of contact surface 2 molten by laser beam 7 melts, an alloyed melt is formed between contact surface 2 and the coating material applied thereon. With the melt solidification, a coating layer 4 is created on contact surface 2. The thickness of coating layer 4 is about 1.5 mm. A strong metallurgical bond adheres the coating layer 4 to the contact surface 2.

Due to the molten-state intermixing of the metallic materials of contact surface 2 and the coating material applied thereon, the first coating layer 4 applied onto contact surface 2 contains a certain amount of aluminum oxide or other metallic compound derived from the base material of contact surface 2. Some amount of the base material of contact surface 2 also migrates to the surface of the first coating layer 4. Hence, it may be advantageous to apply by the laser coating method onto the first coating layer 4 a second coating layer using the same coating material and coating technique as in the application of the first coating layer. In the latter step, the surface of the first coating layer 4 is melted by the laser beam and the coating material is applied to the melt in powdered or other form. As a result, an alloy melt develops between the material of the first coating layer 4 and the new coating material being fed into the melt. With the melt solidification, the second coating layer adheres atop the first coating layer 4. Now, the content of the metal migrating from contact surface 2 becomes in the second coating layer substantially lower than in the first coating layer 4. Respectively, a greater number of superposed coating layers can be formed atop another. Thus the content of metal released from contact surface 2 can be made the lower the farther the outermost coating layer is situated from contact surface 2. Typically, 2 to 6 superposed coating layers are applied atop contact surface 2.

Just prior to starting the coating process, the contact surface 2 is mechanically pretreated free from the oxide layer and other impurities covering contact surface 2. The pretreatment step is applied over the entire area of contact surface 2 to be coated. In the mechanical pretreatment, material is removed from the surface of contact surface 2 without using any chemicals. Advantageous pretreatment methods are cutting and/or abrasive blasting. Suitable cutting techniques are, e.g., turning, milling and honing. In abrasive blasting an abrasive is blown at a high velocity against contact surface 2. The abrasive material generally comprises sand or steel particles. The particles are blasted with the help of compressed air or pressurized water or centrifugally. The pretreatment step is performed on contact surface 2 not later than half an hour prior to the application of the coating layer in order to avoid the formation of a new oxide layer on contact surface 2. A similar pretreatment is also performed for the applied coating layer 4 if a new coating layer shall be applied thereon.

In the following, certain advantageous values of process parameters suitable for use in the embodiment of FIG. 2 are listed assuming that contact surface 2 is made of aluminum:
- laser beam power: 4-6.5 kW
- distance of tip of laser head 5 from contact surface 2: 5-50 mm
- distance of focus point of laser beam 7 from tip of laser head 5: 15-40 mm
- feed rate of powdered coating material: 5-50 g/min
- angle between laser beam 7 and normal of contact surface 2: 5°-85°
- mutual travel speed between laser beam 7 and contact surface 2: 50-400 mm/min
- coating material: pure silver
- particle size in coating material: 20-200 µm
- shielding gas: argon or helium
- mechanical pretreatment (cutting and/or abrasive blasting) performed not later than half an hour prior to coating.

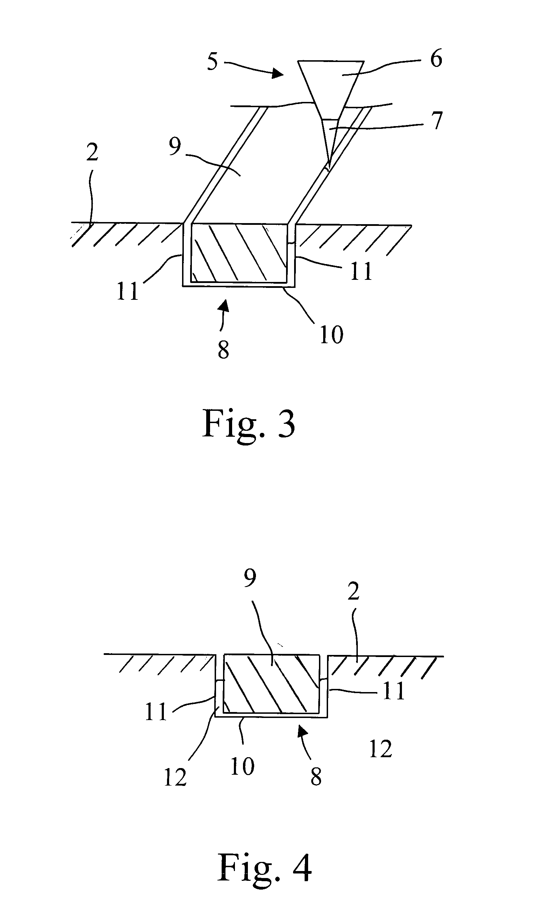

In the embodiment of FIG. 3, to the aluminum contact surface 2 of the connector is made, e.g., by milling, a groove 8 or the like recess, wherein is fitted a contact pad 9 of silver or other noble metal. In the embodiment of FIG. 3 the recess 8, seen from above, is rectangular. The surfaces of recess 8 comprise a bottom 10, side walls 11 aligned at right angles in regard to the bottom 10, and end walls that join the side walls by being aligned at right angles in regard to both the side walls 11 and the bottom 10. The silver pad 9 is prismatic with such a shape that when fitted in recess 8, the rectangular sides of the pad rise at least substantially up to the height of the inner walls of recess 8 or even slightly above the upper edges of recess 8. Obviously, recess 8 and silver pad 9 may be shaped differently. However, an essential feature of the structure is that silver pad 9 substantially conforms with the shape of recess 8 by being slightly smaller than recess 8, whereby a narrow gap remains between the walls of recess 8 and the silver pad 9.

Silver pad 9 is welded tight into recess 8 with the help of a laser welding apparatus 5. Prior to welding, the surfaces of recess 8 are mechanically pretreated using the same techniques as described above for the embodiment of FIG. 2. The pretreatment is performed not later than half an hour prior to the welding operation. A silver-based brazing additive is applied during welding. The laser beam 7 is aimed into the gap between the side wall 11 of recess 8 and silver pad 9. Hereby, the laser beam 7 melts the edges of recess 8 and silver pad 9. Additionally, also the side walls and ends of recess 8 and silver pad 9 melt along the vertical gap therebetween, at least partially over the height down from their upper edges toward the bottom 10 of recess 8. The additive is fed in powder form to the area already melted by laser beam 7. As a result, an alloyed melt is formed between the base material of contact surface 2, silver pad 9 and the molten additive. The contact surface 2 being coated is moved relative to the laser beam 7 and/or the laser beam 7 is moved relative to the contact surface 2. Silver pad 9 is bonded by a continuous weld to the base material of contact surface 2 along its entire outer edge facing contact surface 2, that is, at its periphery facing both side wall edges 11 and ends of recess 8. As a result, no external impurities can reach the gap between silver pad 9 and contact surface 2 even if, e.g., the bottom of silver pad 9 has not been bonded by welding to the bottom 10 of recess 8.

During the welding process, the melt is protected by shielding gas ejected from laser head 6. The coating material is fed coaxially about laser beam 7, whereby the flow of the coating material and the shielding gas surrounds the laser beam 7. In lieu of applying the coating material in powder form, the coating material can be fed in sheet or wire form to the area molten by the laser beam 7. The welding operation is carried out using the same process parameters as those employed in the embodiment of FIG. 2.

When the second contact surface in the embodiment of FIG. 3 touches silver pad 9, electric current can pass via the connector. Herein, the electric current travels from the second contact surface to silver pad 9. From silver pad 9 the electric current further passes to the base material of contact surface 2 chiefly via the points at which silver pad 9 is bonded by welding to the base material of contact surface 2. Obviously, the current path may be considered to run in a direction opposite to that described above.

In FIG. 4 is shown an alternative embodiment to that of FIG. 3 for bonding silver pad 9 to recess 8. Prior to the bonding step, the inner walls of recess 8 are subjected to mechanical pretreatment using the same techniques as in the embodiment of FIG. 2. Pretreatment is performed not later than half an hour prior to bonding.

First, brazing compound 12 is placed in strip or other form on the bottom of recess 8. Advantageously, an aluminum alloy is used as brazing compound 12. Next, the silver pad 9 is fitted into recess 8, onto the brazing compound 12 preplaced therein. The contact surface 2 with the silver pad 9 fitted in recess 8 is transferred into a brazing oven that subsequently is taken to a vacuum by means of a vacuum pump. In lieu of using a vacuum, the oven may be filled with a shielding gas such as argon or nitrogen. The oven is either preheated or gradually heated to a temperature higher than the melting point of brazing compound 12 preplaced between the bottom 10 of recess 8 and the silver pad 9 fitted in the recess. With the melting of brazing compound 12, the molten compound rises under capillary forces upward in the narrow gap between the inner walls 11 and end walls of the recess and the silver pad 9 placed therein. Advantageously, the amount of brazing compound 12 preplaced in the recess is adjusted such that the level of the molten compound rises up to the level of the inner wall edges of recess 8. After the melting of the brazing compound, the oven temperature is allowed to cool down to the ambient temperature.

With the falling temperature, brazing compound 12 undergoes solidification thereby bonding silver pad 9 in recess 8. To pass current via the connector, a second contact surface is placed against silver pad 9. Herein, the electric current travels from the second contact surface to silver pad 9. From silver pad 9 the electric current further passes to the base material of contact surface 2 chiefly via the points at which the silver pad is bonded by brazing to the base material of contact surface 2. Obviously, the current path may be considered to run in a direction opposite to that described above.

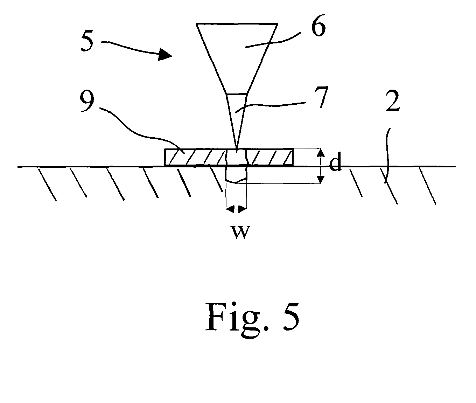

In the embodiment of FIG. 5, contact surface 2 is coated by way of placing a contact pad 9 of a suitable coating material onto contact surface 2 at the point where the first contact surface is intended to face the second contact surface. Next, the laser beam 7 of the laser welding apparatus is aimed against contact pad 9, and contact surface 2 and contact pad 9 are moved relative to the laser beam 7 and/or the laser beam 7 is moved relative to contact surface 2 and contact pad 9. The laser beam is focused so that both the contact pad 9 and the underlying contact surface are melted over a beam width (w) covering an area 1-5 mm wide. With the solidification of the melt, contact pad 9 adheres to contact surface 2. The intermetallic bond is formed close to both ends and/or side wall edges of contact pad 9. When necessary, two or more adjacent bonds can be made at the ends and/or side wall edges of contact pad 9. Bonding is performed without using any brazing additive. The laser beam penetration depth (d), that is, distance over which the laser beam 7 can melt contact pad 9 with the base material of contact surface 2 is about 2-10 mm.

Also in the embodiment of FIG. 5, the contact surface is mechanically pretreated prior to the bonding of contact pad 9. The pretreatment step is performed using the same techniques as in the embodiment of FIG. 2. Pretreatment is carried out not later than half an hour prior to bonding. Listed below are certain process parameter values advantageously used in the embodiment of FIG. 5 when contact surface 2 is of aluminum and contact pad 9 is of silver:
- laser beam power: 4-6.5 kW
- distance of tip of laser head from contact surface 2: 5-50 mm
- distance of focus point of laser beam 7 from tip of laser head 5: 15-40 mm
- angle between laser beam 7 and normal of contact pad 9: 5°-85°
- mutual travel speed between laser beam 7 and contact pad 9: 50-400 mm/min
- shielding gas: argon or helium
- mechanical pretreatment (cutting and/or abrasive blasting) performed not later than half an hour prior to bonding.

When in the embodiment of FIG. 5 the second contact surface touches contact pad 9, electric current can pass via the contact. Herein, the current passageway is from the second contact surface to the silver pad 9. From the silver pad 9, the current passes further into the base material of contact surface 2 at the points bonding the silver pad 9 to the base material of contact surface 2. Obviously, the current may also run in the reverse direction in regard to that outlined above.

In all the above-described embodiments, the base material of contact surface 2 to be coated is advantageously aluminum while the coating material is silver or other noble metal. Generally, the second contact surface 3 is of copper. Connector 1 may be, e.g., the kind of connector described in the introductory part of the present application, whereby the contact surface 2 is a cathode rod made from aluminum and the second contact surface 3 is a contact pad of copper.

## Claims

1. A method for coating a metallic contact surface (2) of an electrical conductor, said contact surface (2) being intended to make contact to a second metallic contact surface (3) for passing electric current via said contact surfaces, in which method on said contact surface (2) is formed a metallic coating layer (4, 9) of a higher electrode potential at the point where said contact surface (2) meets said second contact surface (3), **characterized in that** said contact surface (2) is mechanically pretreated prior to the formation of said coating layer (4, 9).

2. The method of claim 1, **characterized in that** the contact surface (2) is of aluminum.

3. The method of claim 1 or 2, **characterized in that** coating layer (4, 9) is of a noble metal, advantageously of silver.

4. The method of any one of foregoing claims, **characterized in that** the pretreatment of the contact surface (2) is carried out not later than half an hour prior to commencing the coating operation.

5. The method of any one of foregoing claims, **characterized in that** the contact surface (2) is pretreated by cutting machining and/or abrasive blasting.

6. The method of any one of foregoing claims, **characterized in that** the coating layer (4) is formed by a laser coating method.

7. The method of claim 6, **characterized in that** the contact surface (2) is melted by a laser beam (7) and that the coating material is fed onto the area melted by the laser beam (7) on the contact surface (2).

8. The method of claim 6 or 7, **characterized in that** on the coating layer (4) is formed at least a second coating layer.

9. The method of claim 8, **characterized in that** the coating layer (4) is mechanically pretreated prior to the formation of the second coating layer.

10. The method of any one of claims 1-5, **characterized in that** the coating layer is formed by welding onto the contact surface a contact pad (9) of a suitable coating material with the help of a laser welding apparatus (5) in such a fashion that the contact pad (9) is welded to the contact surface (2) about the entire perimeter of the pad mating with the contact surface (2).

11. The method of any one of claims 1-5, **characterized in that** the formation of the coating layer comprises the steps of:
- applying a brazing compound (12) on said contact surface (2),
- placing a contact pad (9) of a suitable coating material on the surface of the brazing compound (12), and
- heating the brazing compound (12) up to a temperature above the melting temperature of the brazing compound (12).
